# EUROPÄISCHE PATENTSCHRIFT

(11) **EP 0 761 408 B1**
(45) Veröffentlichungstag und Bekanntmachung des Hinweises auf die Patenterteilung: **08.03.2000**
(21) Anmeldenummer: 96109855.5
(22) Anmeldetag: 19.06.1996
(51) Int. Cl.: B29C 45/17

(54) **Verfahren zum Herstellen von Kunststoffgegenständen**
Method for the manufacture of plastic articles
Procédé pour la fabrication d'objets en matière plastique

(30) Priorität: 30.08.1995 DE 19531709
(43) Veröffentlichungstag der Anmeldung: 12.03.1997
(73) Patentinhaber: Battenfeld GmbH, D-58540 Meinerzhagen (DE)
(72) Erfinder: Eckardt, Helmut, 58540 Meinerzhagen (DE); Ehritt, Jürgen, 57271 Hilchenbach (DE); Seuthe, Alfons, 58540 Meinerzhagen (DE); Gosdin, Michael, Dr., 58540 Meinerzhagen (DE)

(56) Entgegenhaltungen:
- EP-A- 0 438 279
- EP-A- 0 678 370
- WO-A-96/34731
- PATENT ABSTRACTS OF JAPAN vol. 18, no. 302 (M-1618), 9.Juni 1994 & JP-A-06 064024 (HONDA MOTOR CO LTD), 8.März 1994,
- PATENT ABSTRACTS OF JAPAN vol. 17, no. 552 (M-1491), 5.Oktober 1993 & JP-A-05 154862 (HONDA MOTOR CO LTD), 22.Juni 1993,
- PATENT ABSTRACTS OF JAPAN vol. 17, no. 433 (M-1461), 11.August 1993 & JP-A-05 096560 (ASAHI CHEM IND CO LTD), 20.April 1993,
- PATENT ABSTRACTS OF JAPAN vol. 18, no. 616 (M-1710), 24.November 1994 & JP-A-06 238697 (HONDA MOTOR CO LTD), 30.August 1994,
- PATENT ABSTRACTS OF JAPAN vol. 95, no. 1, 28.Februar 1995 & JP-A-06 297522 (IDEMITSU PETROCHEM CO LTD), 25.Oktober 1994,
- PATENT ABSTRACTS OF JAPAN vol. 96, no. 4, 30.April 1996 & JP-A-07 323436 (IDEMITSU PETROCHEM CO LTD), 12.Dezember 1995,

## Beschreibung

Die Erfindung betrifft ein Verfahren zum Herstellen von Kunststoffgegenständen mit Hohlstellen, das die Schritte aufweist:
- Einspritzen einer ausreichenden Menge Kunststoffschmelze in die Kavität eines Formwerkzeugs entlang eines Schmelzefließwegs, der sich von einer Kunststoffplastifiziereinheit durch eine Kunststoffeinspritzdüse bis ins Formwerkzeug erstreckt;
- Gleichzeitiges und/oder anschließendes Eingeben eines Druckfluids, insbesondere Druckgases, in die Schmelze mittels mindestens einer Fluideinspritzdüse, so daß die ins Formwerkzeug eingebrachte Schmelze unter Hohlraumbildung in der Kavität verteilt und an die Kavitätswandungen des Formwerkzeugs angepreßt wird;
- Abkühlenlassen des so hergestellten Formteils auf eine Temperatur unterhalb des Schmelzpunkts der Kunststoffschmelze;
- Entlastung der Kavität vom Druck des Druckfluids und
- Entformen des Formteils,
   wobei vor, während und/oder nach dem Eingeben von Druckfluid Kunststoffschmelze, gegebenenfalls unter Beimengung von Druckfluid, in mindestens eine Überlaufkavität ausgetrieben wird, die mit der Kavität in Verbindung steht, und
   wobei das Volumen der Überlaufkavität verändert, insbesondere vergrößert, wird.

Ein Verfahren der gattungsmäßigen Art ist aus der JP-A-06-064024 bekannt. Dort tritt bei der Herstellung eines hohlen Kunststoff-Formkörpers Schmelze und Gas von der Hauptkavität in die Nebenkavität über, wobei das Volumen der Nebenkavität mittels eines Kolben-Zylinder-Systems variiert wird.

Ein ähnliches Verfahren ist in der DE 39 13 109 C2 beschrieben. Dort wird eine Produktionsweise von hohlen Kunststoffkörpem offenbart, bei der der Formhohlraum zunächst vollständig mit Kunststoffschmelze ausgefüllt und nach dem Einsetzen des Erstarrens der Schmelze an den Wänden des Formhohlraums die noch schmelzflüssige Seele des Kunststoffkörpers mittels des Fluids in mindestens eine außerhalb des Formhohlraums angeordnete und mit diesem verbundene entformbare Nebenkavität ausgetrieben wird. Damit ist es möglich, Kunststoffkörper herzustellen, die auch bei komplizierter geometrischer Form eine einwandfreie Oberfläche, insbesondere ohne Fließmarkierungen, aufweisen, die auch im Falle weniger, verhältnismäßig enger Hohlräume in einem weitgehend massiven Kunststoffkörper keine Einfallstellen in der Oberfläche zeigen.

Aus der EP 0 321 117 B1 ist ein Gasinnendruckverfahren bekannt, bei dem in ähnlicher Weise die Kavität eines Werkzeugs zunächst mit Schmelze gefüllt wird, wobei diese auch in eine mit der Kavität fluidisch verbundene Überlaufkavität fließt. Druckgas wird dann vom Überlauf aus in das Innere der noch flüssigen Kunststoffmasse eingebracht. Dadurch wird im Formteil ein Hohlraum gebildet, der sowohl aus Gründen der Gewichtsersparnis als auch wegen der Materialeinsparung vorteilhaft ist.

Weiterhin ist ein ähnliches Verfahren aus der EP 0 438 279 A1 bekannt. Ziel ist es dort, den eigentlichen Spritzgießprozeß unter dem für das Spritzgießen typischen hohen Druck auszuführen und nicht unter dem vergleichsweise geringen Gasdruck, der beim Gasinnendruckverfahren normalerweise gegeben ist. Trotzdem sollen die Vorteile des Gasinnendruckverfahrens genutzt werden. Daher ist am Ende der Kavität hier ein Verschluß vorgesehen, der zunächst verschlossen ist. In dieser Betriebsweise wird Schmelze mit hohem Druck in die Kavität gespritzt, bis diese vollständig gefüllt ist. Nach Beginn des Erstarrens der Schmelze wird der Verschluß geöffnet und so eine Verbindung zu einer Überlaufkavität freigegeben. In diese wird dann die schmelzflüssige Seele des Formteils unter Anwendung von Druckgas ausgetrieben.

Bei den bekannten Verfahren sind eine Reihe von Nachteilen beobachtet worden:

Da die fluidische Verbindung zwischen Haupt- und Nebenkavität in der EP 0 321 117 B1 unbeeinflußbar und stets offen ist, ist das Überfließen von Schmelze von der Kavität in die Überlaufkavität nicht direkt steuerbar. Hieraus ergibt sich, daß der gesamte Spritzgießprozeß schwer zu kontrollieren und zu steuern ist. Ferner ergibt sich aus dieser beschriebenen Verfahrensweise, daß das Druckgas, das von der Überlaufkavität in die Kavität fließt, einen Fließkanal hinterläßt, der beim fertigen Formteil einen negativen Einfluß bezüglich der Oberflächengüte hat.

Der Fluß von Schmelze von der Kavität in die Überlaufkavität ist in der DE 39 13 109 C2 und der EP 0 438 279 A1 zwar beeinflußbar. In der EP 0 438 279 A1 ist jedoch lediglich vorgesehen, daß die Verbindung von der Hauptkavität zur Nebenkavität zu einem bestimmten Zeitpunkt freigegeben wird. Damit ist zwar der Zeitpunkt für das Überströmen von Schmelze bestimmt; jedoch findet ab diesem Zeitpunkt keine Kontrolle des Schmelzeflusses mehr statt. In der DE 39 13 109 C2 sind hingegen Schieberelemente im Verbindungskanal zwischen Haupt- und Nebenkavität vorgesehen, die den Schmelzefluß regeln können. Nachteilhaft ist hier jedoch, daß ein relativ komplizierter apparativer Aufbau erforderlich ist, um das dort beschriebene Verfahren zu nutzen. Wegen dieses filigranen Aufbaus ist es auch nicht sichergestellt, daß die Flußsteuerelemente zwischen Haupt- und Überlaufkavität zuverlässig arbeiten, insbesondere, daß der Verbindungskanal zwischen der Kavität und dem Überlauf nicht "einfriert", also sich mit abgekühlter Schmelze zusetzt.

Der Erfindung liegt daher die **Aufgabe** zugrunde, ein Verfahren zu schaffen, mit dem es möglich ist, die vorgenannten Nachteile zu beheben, also den Fluß von Schmelze von der Kavität zum Überlauf permanent und genau zu steuern bzw. zu regeln, ohne einen komplizierten apparativen Aufwand mit Absperrmitteln o. ä. zu benötigen, die die Gefahr bergen, nicht über alle Betriebszustände und langfristig voll funktionsfähig zu bleiben. Die hergestellten Kunststoff-Formteile sollen dabei frei von Oberflächenstörungen (Gasaustrittsöffnungen) sein.

Die **Lösung** der Aufgabe ist dadurch gekennzeichnet, daß vor Verfahrensschritt c) das Volumen der Überlaufkavität (8) verkleinert wird, um Kunststoffschmelze von der Überlaufkavität (8) in die Kavität (2) zurückzutreiben und eine gegebenenfalls durch Druckfluidaustritt von der Kavität (2) in die Überlaufkavität (8) entstandene Öffnung wieder zu verschließen.

Dies ist also vorgesehen, um einen bei Gasabfluß von der Hauptkavität in die Nebenkavität entstandenen Gasfließweg und eine daraus resultierende Öffnung am fertigen Formteil zu verhindern.

Dabei ist vorzugsweise vorgesehen, daß die Veränderung des Volumens der Überlaufkavität (8) gesteuert oder geregelt wird. Diese Steuerung bzw. Regelung kann sich dadurch auszeichnen, daß die Veränderung des Volumens der Überlaufkavität (8) in Abhängigkeit von der Zeit nach Beginn der Kavitätsfüllung mit Kunststoffschmelze und/oder in Abhängigkeit vom Druck in der Kavität (2) gesteuert oder geregelt wird.

Vorteilhafterweise kann vorgesehen werden, daß zur Aufrechterhaltung einer steten fluidischen Verbindung zwischen Kavität (2) und Überlaufkavität (8) der Verbindungsbereich zwischen Kavität (2) und Überlaufkavität (8) beheizt wird.

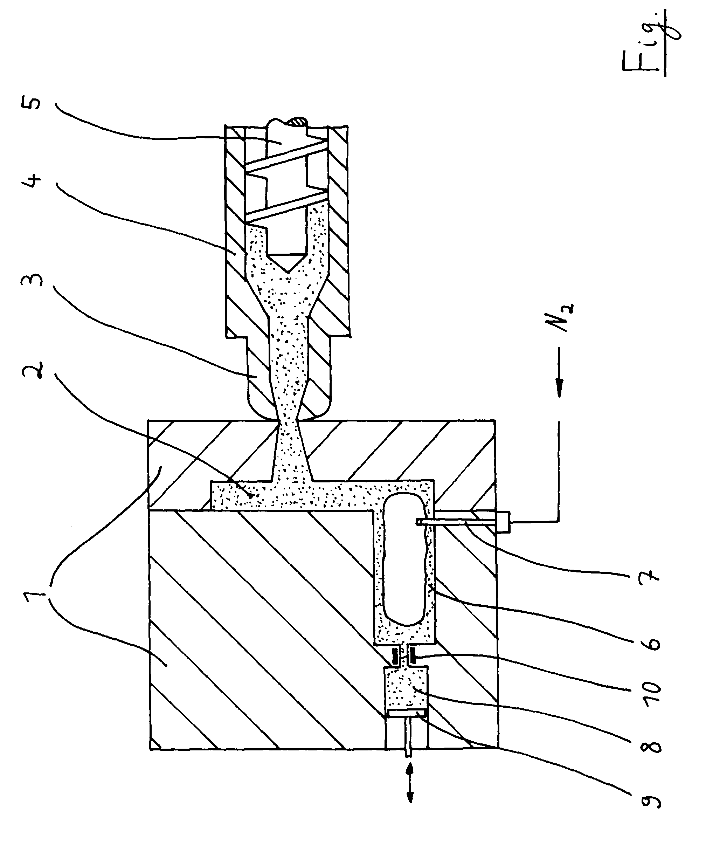

In der Zeichnung ist ein erfindungsgemäßes Ausführungsbeispiel dargestellt: Die Figur zeigt schematisch die erfindungsgemäße Spritzgießvorrichtung für die Herstellung hohler Kunststoffgegenstände.

Ein zweiteiliges Formwerkzeug 1 beinhaltet eine Kavität 2, also einen Hohlraum, der die äußere Oberfläche eines herzustellenden Formteils 6 definiert. An das Werkzeug ist eine Kunststoffplastifiziereinheit 4, 5 angeschlossen, die aus einem Schneckenzylinder 4 und aus einer darin rotatorisch und axial bewegbaren Schnecke 5 besteht. Die Verbindung zwischen Formwerkzeug 1 und Kunststoffplastifiziereinheit 4, 5 wird durch eine Kunststoffeinspritzdüse 3 hergestellt.

In die Kavität 2 hineinverfahrbar ist eine Fluideinspritzdüse 7 angeordnet, die in der hineingefahrenen Position dargestellt ist. Mit dieser kann Druckfluid, im vorliegenden Fall unter Druck stehender Stickstoff aus einer nicht dargestellten Quelle bzw. Versorgungseinheit, in die Kavität eingegeben werden. Das Druckgas verteilt die Schmelze in der Kavität 2 und drückt sie an die Wandungen des Werkzeugs 1. Die Fluideinspritzdüse 7 kann an einer beliebigen Stelle des Werkzeugs angebracht werden; sie kann z. B. auch konzentrisch mit der Kunststoffeinspritzdüse 3 angeordnet sein, wodurch Schmelze und Fluid durch dieselbe Werkzeugöffnung eingegeben werden. Anstelle der direkt in die Kavität ragenden Fluideinspritzdüse können also alternativ oder additiv auch andere bekannte Begasungselemente vorgesehen sein, z. B. Fluiddüsen, die in die Kunststoffeinspritzdüse 3 oder in den Anguß integriert sind. Sinnvoll kann es auch sein, mehrere Fluideinspritzdüsen 7 zu verwenden.

Mit der Kavität 2 verbunden ist eine Überlaufkavität 8. Diese kann Kunststoffschmelze und ggf. auch Druckfluid aufnehmen; sie steht daher in fluidischer Verbindung mit der Kavität 2. Der Verbindungskanal zwischen Kavität 2 und Überlaufkavität 8 ist mit Heizmitteln 10 ausgestattet. Damit wird verhindert, daß Schmelze in diesem Verbindungskanal zu stark abkühlt, also "einfriert", und den Verbindungskanal zusetzt. Die Heizmittel 10 sorgen also für eine stete fluidische Kopplung von Haupt- und Nebenkavität. Der Verbindungskanal kann auch nur sehr kurz ausgebildet sein, so daß er eigentlich wegfällt; Kavität 2 und Überlaufkavität 8 stehen dann in unmittelbarer Verbindung. Vorgesehen kann auch sein, daß der Bereich der Überlaufkavität 8 mit - nicht dargestellten - Heizmitteln ausgestattet ist. Dies ist insbesonderer dann sinnvoll, wenn zum Zyklusende Schmelze von der Überlaufkavität 8 zurück in die Hauptkavität 2 gedrückt werden soll, s. u.; dann darf die Schmelze in der Überlaufkavität 8 nicht vorschnell einfrieren.

Die Überlaufkavität 8 wird durch einen Kolben 9 begrenzt, dessen Position das effektive Volumen der Überlaufkavität 8 definiert. In der Figur ist dies durch einen Doppelpfeil dargestellt, der andeutet, daß der Kolben in Pfeilrichtung verschieblich angeordnet ist. Die Überlaufkavität 8 selber fungiert in dieser Ausgestaltung als Zylinder.

Zum Herstellen eines Formteils 6 wird wie folgt vorgegangen:

Zunächst wird Kunststoffschmelze in für die Herstellung des Formteils 6 ausreichender Menge von der Kunststoffplastifiziereinheit in die Kavität 2 eingespritzt. Sie füllt - zumindest teilweise - die Kavität 2 aus, wobei der Kolben 9 vorzugsweise in der rechten Anschlagsposition ist, das Volumen der Überlaufkavität also minimal ist. Dadurch kann praktisch keine Schmelze in die Überlaufkavität 8 abfließen.

Anschließend wird Druckgas in die Schmelze mittels der Fluideinspritzdüse 7 injiziert. Dies hat die beim Gasinnendruck-Verfahren üblichen Gründe: Zum einen wird das Formteil hohl und damit leichter, andererseits wird Kunststoffmaterial eingespart. Vor allem wird dadurch aber erreicht, daß das Gas die Schmelze an die Kavitätswand drückt und so die abkühlungsbedingte Schrumpfungsneigung des sich verfestigenden Kunststoffs ausgleicht, wodurch eine gute Oberfläche ohne Einfallstellen erreicht wird.

Eine Anwendungsmöglichkeit der vorliegenden Erfindung ist, daß mit der Eingabe von Druckgas und der Schaffung des Hohlraums im Inneren des Formteils 6 der Kolben 9 allmählich, von einer nicht dargestellten Steuerung bzw. Regelung beeinflußt, nach links bewegt wird, wodurch sich das Volumen der Überlaufkavität 8 vergrößert. Abgesehen von der durch Schrumpfung des Material beim Abkühlen verursachten Volumenkontraktion wird dann also das dem Hohlraum im Inneren des Formteils entsprechende Volumen in die Überlaufkavität 8 ausgetrieben, die gerade dieses Volumen durch die entsprechende Kolbenposition bereitstellt.

Abwandlungen von dieser Annwendungsmöglichkeit bestehen darin, daß bereits mit der Eingabe von Schmelze in die Kavität 2 Druckgas injiziert wird; die Kavität wird in diesem Falle nicht vollständig mit Schmelze gefüllt. Andererseits kann vorgesehen werden, daß Gas erst dann eingespritzt wird, wenn bereits - nach vollständiger Kavitätsfüllung mit Schmelze - selbige in den Überlauf ausgetreten ist.

Entscheidend ist in jedem Falle, daß durch Bewegung des Kolbens 9 das Volumen der Überlaufkavität 8 variiert wird. Die muß nicht notwendigerweise aktiv, also durch eine entsprechende Steuerung oder Regelung in Verbindung mit einem Stellmechanismus erfolgen. Es kann auch vorgesehen werden, daß der Kolben in seiner rechten Position (minimales Volumen der Überlaufkavität 8) vorgespannt, z. B. durch Federelemente, verharrt, wobei die Vorspannung so gewählt ist, daß sich die Vergrößerung des Volumens der Überlaufkavität 8 dann einstellt, wenn gewisse Druckverhältnisse in der Kavität 2 herrschen, die den Kolben veranlassen, nach links zu wandern.

Im Falle einer aktiven Steuerung bzw. Regelung der Volumenveränderung der Überlaufkavität kann vorgesehen werden, daß die Änderung in Abhängigkeit von der Zeit nach Beginn der Kavitätsfüllung mit Kunststoffschmelze oder in Abhängigkeit vom Druck in der Kavität 2 erfolgt.

Für die Bewegung des Kolbens 9 kommen übliche Antriebselemente (z. B. mechanisch, hydraulisch, elektrisch oder pneumatisch wirkende) in Betracht.

Sollte nicht nur Schmelze, sondern auch Druckgas in die Überlaufkavität 8 ausgetreten sein, hinterläßt das Gas in der Regel nach dem Aushärten des Formteils einen Kanal, der an der Oberfläche des fertigen Formteils stört. Erfindungsgemäß ist vorgesehen, daß dieser Kanal vor dem Aushärten wieder verschlossen wird. Hierzu wird der Kolben 9 etwas zurück (nach rechts) bewegt, wodurch Schmelze von der Überlaufkavität 8 zurück in die Kavität 2 verdrängt wird. Dabei verschließt sich besagter Kanal, wodurch eine einwandfreie Oberfläche am fertigen Formteil erreicht wird.

Wenn die das Formteil 6 formende Schmelze genügend abgekühlt ist, kann das Formwerkzeug 1 entformt werden, das Formteil 6 wird also entnommen. Vor der Öffnung der beiden Werkzeughälften muß jedoch zunächst der Fluiddruck im Formteil abgebaut werden. Hierzu wird z. B. mittels geeigneter Ventile - nicht dargestellt - der Gasfließweg freigegeben.

Die Überlaufkavität 8 muß vor dem nächsten Spritzgießzyklus ebenfalls entformt werden. Ihr erstarrter Inhalt kann zum Recycling weitergeleitet werden.

### Bezugszeichenliste:

- 1: Formwerkzeug
- 2: Kavität des Formwerkzeugs
- 3: Kunststoffeinspritzdüse
- 4: Schneckenzylinder
- 5: Schnecke
- 4, 5: Kunststoffplastifiziereinheit
- 6: Formteil
- 7: Fluideinspritzdüse
- 8: Überlaufkavität
- 9: Mittel zum Verändern des Volumens der Überlaufkavität 8; Kolben
- 10: Heizmittel

## Patentansprüche

1. Verfahren zum Herstellen von Kunststoffgegenständen mit Hohlstellen, das die Schritte aufweist:
a) Einspritzen einer ausreichenden Menge Kunststoffschmelze in die Kavität (2) eines Formwerkzeugs (1) entlang eines Schmelzefließwegs, der sich von einer Kunststoffplastifiziereinheit (4, 5) durch eine Kunststoffeinspritzdüse (3) bis ins Formwerkzeug (1) erstreckt;
b) Gleichzeitiges und/oder anschließendes Eingeben eines Druckfluids, insbesondere Druckgases, in die Schmelze mittels mindestens einer Fluideinspritzdüse (7), so daß die ins Formwerkzeug eingebrachte Schmelze unter Hohlraumbildung in der Kavität (2) verteilt und an die Kavitätswandungen des Formwerkzeugs (1) angepreßt wird;
c) Abkühlenlassen des so hergestellten Formteils (6) auf eine Temperatur unterhalb des Schmelzpunkts der Kunststoffschmelze;
d) Entlastung der Kavität (2) vom Druck des Druckfluids; und
e) Entformen des Formteils;
wobei vor, während und/oder nach dem Eingeben von Druckfluid gemäß Verfahrensschritt b) Kunststoffschmelze, gegebenenfalls unter Beimengung von Druckfluid, in mindestens eine Überlaufkavität (8) ausgetrieben wird, die mit der Kavität (2) in Verbindung steht, und
wobei das Volumen der Überlaufkavität (8) verändert, insbesondere vergrößert, wird,
**dadurch gekennzeichnet,** daß vor Verfahrensschritt c) das Volumen der Überlaufkavität (8) verkleinert wird, um Kunststoffschmelze von der Überlaufkavität (8) in die Kavität (2) zurückzutreiben und eine gegebenenfalls durch Druckfluidaustritt von der Kavität (2) in die Überlaufkavität (8) entstandene Öffnung wieder zu verschließen.

2. Verfahren nach Anspruch 1, dadurch gekennzeichnet, daß die Veränderung des Volumens der Überlaufkavität (8) gesteuert oder geregelt wird.

3. Verfahren nach Anspruch 2, dadurch gekennzeichnet, daß die Veränderung des Volumens der Überlaufkavität (8) in Abhängigkeit von der Zeit nach Beginn der Kavitätsfüllung mit Kunststoffschmelze und/oder in Abhängigkeit vom Druck in der Kavität (2) gesteuert oder geregelt wird.

4. Verfahren nach einem der Ansprüche 1 bis 3, dadurch gekennzeichnet, daß zur Aufrechterhaltung einer steten fluidischen Verbindung zwischen Kavität (2) und Überlaufkavität (8) der Verbindungsbereich zwischen Kavität (2) und Überlaufkavität (8) beheizt wird.

## Claims

1. Process for producing plastic objects with hollow spots, having the steps:
a) injecting an adequate quantity of plastic melt into the cavity (2) of a mould (1) along a melt flow path which extends from a plastic plastifying unit (4, 5) through a plastic injection nozzle (3) into the mould (1);
b) simultaneous and/or subsequent addition of a compressed fluid, in particular compressed gas, into the melt by means of at least one fluid injection nozzle (7), so that the melt introduced into the mould is distributed in the cavity (2) with hollow space formation and pressed against the cavity walls of the mould (1);
c) allowing the moulding (6) thus produced to cool to a temperature below the melting point of the plastic melt;
d) relieving the cavity (2) of the pressure of the compressed fluid; and
e) removing the moulding from the mould;
wherein plastic melt, optionally while adding compressed fluid, is expelled into at least one overflow cavity (8), which is connected to cavity (2), before, during and/or after addition of compressed fluid according to process step b), and
wherein the volume of the overflow cavity (8) is changed, in particular increased,
characterised in that the volume of the overflow cavity (8) is reduced before process step c) to drive back plastic melt from the overflow cavity (8) into the cavity (2) and re-close an opening produced optionally by escape of compressed fluid from the cavity (2) into the overflow cavity (8).

2. Process according to claim 1, characterised in that the change in volume of the overflow cavity (8) is controlled or monitored.

3. Process according to claim 2, characterised in that the change in volume of the overflow cavity (8) is controlled or monitored as a function of the time after the start of the cavity filling with plastic melt and/or as a function of the pressure in the cavity (2).

4. Process according to one of claims 1 to 3, characterised in that the connecting region between cavity (2) and overflow cavity (8) is heated to maintain a constant fluid connection between cavity (2) and overflow cavity (8).

## Revendications

1. Procédé de fabrication d'objets en matière plastique pourvus de creux, qui présente les étapes suivantes :
a) injection d'une quantité suffisante de matière plastique fondue dans la cavité (2) d'un moule (1) le long d'un chemin d'écoulement qui s'étend d'un bloc de plastification (4, 5), en passant par une buse d'injection de matière plastique (3), jusque dans le moule (1),
b) introduction simultanée et/ou postérieure d'un fluide sous pression, en particulier d'un gaz sous pression, dans la matière fondue au moyen d'au moins une buse d'injection de fluide (7), de sorte que la matière fondue introduite dans le moule se répartit dans la cavité (2) avec formation d'espaces vides et est pressée contre les parois de la cavité du moule (1),
c) refroidissement de la pièce moulée (6) ainsi fabriquée à une température inférieure au point de fusion de la matière plastique,
d) décharge de la cavité (2) de la pression du fluide sous pression, et
e) démoulage de la pièce moulée,
avant, pendant et/ou après l'introduction de fluide sous pression selon l'étape b), de la matière plastique fondue étant, éventuellement avec addition de fluide sous pression, expulsée dans au moins une cavité de trop-plein (8) qui communique avec la cavité (2),
et le volume de la cavité de trop-plein (8) étant soumis à variation, en particulier augmenté,
caractérisé par le fait
qu'avant l'étape c), le volume de la cavité de trop-plein (8) est diminué pour ramener de la matière plastique fondue de la cavité de trop-plein (8) dans la cavité (2) et refermer une ouverture éventuellement formée par sortie de fluide sous pression de la cavité (2) dans la cavité de trop-plein (8).

2. Procédé selon la revendication 1, caractérisé par le fait que la variation du volume de la cavité de trop-plein (8) est commandée ou régulée.

3. Procédé selon la revendication 2, caractérisé par le fait que la variation du volume de la cavité de trop-plein (8) est commandée ou régulée en fonction du temps après le début du remplissage de la cavité (2) de matière plastique fondue et/ou en fonction de la pression dans la cavité (2).

4. Procédé selon l'une des revendications 1 à 3, caractérisé par le fait que pour le maintien d'une liaison fluidique permanente entre la cavité (2) et la cavité de trop-plein (8), la zone de liaison entre ces deux cavités est chauffée.
